Europäisches Patentamt

European Patent Office

Office européen des brevets

(19)

(11) Numéro de publication:

**0 018 875**

A1

(12) **DEMANDE DE BREVET EUROPEEN**

(21) Numéro de dépôt: 80400492.7

(22) Date de dépôt: 14.04.80

(51) Int. Cl.³: **H 04 M 1/274**
H 04 M 15/30

(30) Priorité: 13.04.79 FR 7909479

(43) Date de publication de la demande:
12.11.80 Bulletin 80/23

(84) Etats Contractants Désignés:
AT BE CH DE GB IT LI LU NL SE

(71) Demandeur: Sociéte de BREVETS D'INVENTION -
BREVIN Société à responsabilité limitée dite:
50, rue Castagnary
F-75015 Paris(FR)

(71) Demandeur: Wluka, Christine
Hollentalstrasse 60
Freiburg-i-Bresgau(DE)

(72) Inventeur: Derveaux, Oscar
28, rue Spontini
F-75116 Paris(FR)

(74) Mandataire: Nony, Michel
29, rue Cambacérès
F-75008 Paris(FR)

(54) Perfectionnement aux générateurs automatiques d'appels téléphoniques.

(57) Ce générateur du type comprenant une mémoire de capacité prédéterminée, un registre de lecture des signaux numériques, un émetteur d'impulsions d'appel, un circuit de commande dudit émetteur et des moyens pour détecter la tonalité, est caractérisé par le fait qu'il comprend des moyens pour détecter si le premier ou les deux premiers chiffres du numéro d'appel sélectionné forment un préfixe, et que le circuit de commande de l'émmetteur d'impulsions d'appel comprend des moyens commandés par le détecteur du préfixe pour arrêter l'émission du numéro d'appel à la fin du préfixe, et des moyens commandés par le détecteur de la tonalité pour reprendre l'émission de ce numéro d'appel au début du numéro proprement dit.

EP 0 018 875 A1

./...

Croydon Printing Company Ltd.

Fig.1

-1-

Perfectionnement aux générateurs automatiques
d'appels téléphoniques

La présente invention concerne des perfectionnements aux
générateurs automatiques d'appels téléphoniques.

On connaît déjà de tels appareils comprenant une mémoire
comportant une pluralité de registres-mémoires de capacité
prédéterminée, un registre de lecture des signaux numériques
lus dans la mémoire, un émetteur d'impulsions d'appel, un
circuit de commande dudit émetteur d'impulsions d'appel, et
des moyens pour détecter la tonalité d'invitation à transmettre, chaque registre-mémoire pouvant contenir au moins un
numéro d'appel.

Ces appareils comportent un clavier comprenant généralement
des touches numériques et des touches de fonction. Les
touches de fonction permettent de sélectionner parmi les
divers modes de fonctionnement possible de l'appareil celui
qui doit être utilisé. Les touches numériques permettent
soit d'adresser de façon aléatoire l'un des registres-
mémoires de la mémoire, soit d'inscrire un numéro d'appel
particulier dans un de ces registres-mémoires.

Le fonctionnement de ces générateurs automatiques d'appels
téléphoniques est d'une manière générale le suivant.

Lorsque l'on veut inscrire en mémoire un numéro d'appel, un
registre-mémoire particulier est adressé au moyen des touches numériques. L'appareil est alors mis en mode d'écriture
à l'aide d'une des touches de fonction et le numéro d'appel
est inscrit dans le registre-mémoire sélectionné, également
à l'aide des touches numériques. Lorsqu'un numéro d'appel
doit au contraire être lu en mémoire, le registre-mémoire
sur lequel il est inscrit est adressé à l'aide des touches
numériques, puis à l'aide d'une des touches de fonction, l'appareil est mis en mode de lecture et, éventuellement, à l'aide d'une autre touche de fonction le numéro d'appel sélectionné est émis sur la ligne à laquelle est relié l'appareil.

Dans les générateurs automatiques d'appels téléphoniques du type mentionné ci-dessus, l'émission s'effectue de la façon suivante. L'appareil est tout d'abord placé en attente de la tonalité d'invitation à transmettre. Des moyens sont prévus pour détecter cette tonalité et lorsqu'elle est présente ces moyens valident la suite du processus.

Chaque chiffre du numéro d'appel contenu dans le registre-mémoire sélectionné est transféré séquentiellement dans le registre de lecture des signaux numériques. Le circuit de commande de l'émetteur d'impulsions d'appel provoque alors l'émission par ce dernier d'un nombre d'impulsions d'appel égal au contenu du registre de lecture. Lorsque ces impulsions ont été émises, le chiffre suivant du registre-mémoire est transféré dans le registre de lecture et le processus se poursuit de la même manière jusqu'à ce que tous les chiffres du numéro d'appel aient été émis.

On sait que les numéros d'appel locaux comportent un seul groupe de chiffres, généralement six ou sept, qui doivent être émis l'un à la suite de l'autre sans interruption. Par contre, dans le cas d'appels interurbains ou internationaux, il y a lieu d'émettre tout d'abord un préfixe puis d'attendre une nouvelle tonalité et enfin de composer le numéro d'appel proprement dit. Sur le réseau français actuel par exemple, ces préfixes sont respectivement 16 et 19 pour les communications interurbaines et les communications internationales.

Dans les générateurs automatiques d'appels téléphoniques connus jusqu'à présent, lorsqu'un numéro d'appel comporte un tel préfixe, celui-ci est enregistré en premier lieu dans le registre-mémoire sélectionné, puis un caractère spécial, c'est-à-dire ne correspondant à aucune valeur numérique, est inscrit, à la suite de quoi le numéro d'appel proprement dit est enregistré. Lorsque l'appareil est en mode de lecture, le préfixe est émis comme ci-dessus. Lorsque le caractère spécial est rencontré, l'appareil est mis en attente de la tonalité d'invitation à transmettre et ce n'est que lorsque celle-ci est détectée par le détecteur de la tonalité d'invitation à transmettre que le numéro d'appel proprement dit est émis.

Bien que cette conception donne généralement satisfaction, elle présente toutefois l'inconvénient d'utiliser un des emplacements du registre-mémoire pour l'inscription du caractère spécial. Ceci peut être une gêne si les registres-mémoires sont trop courts du fait que certains numéros d'appels peuvent comprendre un grand nombre de chiffres, ou si l'on veut inscrire à la suite de ce numéro d'appel une indication quelconque relative à ce numéro comme ceci sera vu ci-après.

Un des buts de la présente invention est de fournir un générateur automatique d'appels téléphoniques du type décrit ci-dessus et dans lequel il ne soit pas nécessaire d'inscrire un caractère spécial après le préfixe lorsque le numéro d'appel concerné comporte un tel préfixe.

A cet effet, le générateur automatique d'appels téléphoniques selon l'invention est caractérisé par le fait qu'il comprend des moyens pour détecter si le premier ou les deux premiers chiffres du numéro d'appel sélectionné forment un préfixe et que le circuit de commande de l'émetteur d'impulsions d'appel comprend des moyens commandés par le détecteur du préfixe pour arrêter l'émission du numéro d'appel à la fin du préfixe et des moyens commandés par le détecteur de la tonalité d'invitation à transmettre pour reprendre l'émission de ce numéro d'appel au début du numéro proprement dit.

-4-

Ainsi, au lieu que l'appareil soit mis en attente de la tonalité d'invitation à transmettre à l'aide d'un caractère spécial enregistré dans le registre-mémoire, cette mise en attente est effectuée par le circuit de commande de l'émetteur d'impulsions d'appel lorsque l'on a détecté si les deux premiers chiffres du numéro d'appel sélectionné forment un préfixe. Le numéro d'appel proprement dit n'est ensuite émis que lorsque le détecteur de la tonalité d'invitation à transmettre a commandé la reprise de l'émission.

Dans le cas où l'appareil est appelé à être utilisé notamment sur le réseau téléphonique français actuel, lesdits moyens pour détecter si les deux premiers chiffres du numéro d'appel sélectionnés forment un préfixe, comprennent des moyens pour détecter si le premier chiffre du numéro d'appel sélectionné lu dans le registre de lecture est un 1 et des moyens pour conserver cette information en mémoire.

En effet, les deux préfixes utilisés dans ce cas, à savoir le 16 pour les communications interurbaines et le 19 pour les communications internationales, débutent par un 1. Dans le cas où le contenu du registre-mémoire débute par un tel préfixe, c'est donc un 1 qui sera lu en premier dans le registre de lecture. Ce 1 est alors détecté et l'information correspondante est mise en mémoire jusqu'à ce que le deuxième caractère contenu dans le registre-mémoire soit transféré dans le registre de lecture et analysé.

Toujours dans le cas où le générateur automatique d'appels téléphoniques selon l'invention est appelé à être utilisé notamment sur le réseau français actuel, lesdits moyens pour détecter si les deux premiers chiffres du numéro d'appel sélectionné forment un préfixe comprennent des moyens pour détecter si le deuxième chiffre du numéro d'appel sélectionné lu dans le registre de lecture est un 6 ou un 9 et des moyens pour combiner cette information avec l'information mise en mémoire et concernant le premier chiffre du numéro d'appel sélectionné.

Ainsi, lorsque le deuxième caractère contenu dans le registre-mémoire est transféré dans le registre de lecture, il est analysé afin de déterminer s'il s'agit d'un 6 ou d'un 9. Dans l'un ou l'autre cas, cette information est combinée avec l'information concernant le premier chiffre du numéro d'appel et si ce premier chiffre est un 1 on sait alors que le numéro d'appel comporte un préfixe. Le circuit de commande de l'émetteur d'impulsions d'appel commande alors l'arrêt de l'émission jusqu'à ce que la tonalité d'invitation à transmettre soit détectée.

Selon une variante de la présente invention, les moyens pour détecter si le premier ou les deux premiers chiffres du numéro d'appel selectionné forment un préfixe comprennent des moyens pour conserver en mémoire la valeur d'au moins un préfixe, et des moyens pour comparer cette valeur avec le premier ou les deux premiers chiffres du numéro d'appel sélectionné lu dans le registre de lecture.

Dans cette variante, le générateur automatique de l'invention n'est donc pas limité à une utilisation sur un réseau où les préfixes sont 16 et 19, mais peut au contraire être adapté sur n'importe quel réseau.

Avantageusement, lesdits moyens pour conserver en mémoire la valeur d'au moins un préfixe sont formés par au moins une partie d'un des registres-mémoires de la mémoire d'appel.

On sait par ailleurs que lorsqu'un appareil téléphonique est raccordé au réseau téléphonique par l'intermédiaire d'un autocommutateur, la prise directe du réseau nécessite l'émission d'un numéro spécial. Dans tous les générateurs automatiques d'appels téléphoniques connus, ce numéro spécial est inscrit dans chaque registre-mémoire avant le numéro d'appel enregistré et séparé de ce dernier par un caractère spécial.

A chaque fois que le générateur automatique d'appels téléphoniques est utilisé, le cycle commence par conséquent par l'émission du numéro spécial. Lorsque celui-ci a été émis, l'appareil rencontre le caractère spécial qui sépare le numéro spécial du numéro d'appel proprement dit et l'appareil est mis en attente de la tonalité d'invitation à transmettre. Ce n'est que lorsque cette dernière est détectée que l'émission du numéro d'appel proprement dit est entreprise.

Un premier inconvénient de cet agencement est qu'il est nécessaire lorsque l'on enregistre en mémoire les numéros d'appels de commencer chaque enregistrement par l'inscription du numéro spécial et par une inscription du caractère spécial.

Par ailleurs, on rencontre les mêmes inconvénients que précédemment, à savoir que des emplacements de mémoires sont utilisés pour l'inscription d'informations autres que les chiffres du numéro d'appel. Ceci est particulièrement grave dans le cas où les registres-mémoires comportent seize caractères puisqu'il est alors impossible d'inscrire dans le même registre-mémoire deux numéros d'appels locaux.

Un autre but de la présente invention est de fournir un générateur automatique d'appels téléphoniques du type mentionné ci-dessus dans lequel il ne soit pas nécessaire d'inscrire avant chaque numéro d'appel enregistré en mémoire le numéro spécial permettant la prise directe du réseau.

A cet effet, le générateur automatique d'appels téléphoniques selon l'invention est caractérisé par le fait qu'il comprend des moyens pour conserver en mémoire une information indiquant s'il est ou non raccordé au réseau téléphonique par l'intermédiaire d'un autocommutateur, des moyens pour conserver en mémoire, dans le cas où il est raccordé au réseau téléphonique par l'intermédiaire d'un autocommutateur, le numéro spécial à émettre en vue de la prise directe du réseau, des moyens pour relier sélectivement l'entrée dudit registre de lecture soit aux moyens pour conserver en mémoire le numéro spécial, soit à un registre-mémoire déterminé, et des moyens pour transmettre audit circuit de commande de l'émetteur d'impulsions d'appel le contenu dudit registre de lecture.

Ainsi, le numéro spécial à émettre en vue de la prise directe du réseau n'a pas lieu d'être inscrit dans le registre-mémoire préalablement au numéro d'appel. S'il est indiqué que l'appareil est raccordé au réseau téléphonique par l'intermédiaire d'un autocommutateur, l'entrée du registre de lecture dans lequel se trouve le nombre d'impulsions d'appel à émettre est reliée successivement aux moyens pour conserver en mémoire le numéro spécial puis au registre-mémoire sélectionné de sorte que le numéro spécial est émis automatiquement avant le numéro d'appel proprement dit.

Dans une forme de réalisation préférée, les moyens pour relier sélectivement l'entrée dudit registre de lecture soit aux moyens pour conserver en mémoire le numéro spécial, soit à un registre-mémoire déterminé, sont commandés par les moyens pour conserver en mémoire l'information indiquant que le générateur est ou non raccordé au réseau téléphonique par l'intermédiaire d'un autocommutateur pour, dans le cas où cette information est positive, relier avant de débuter un cycle d'émission, l'entrée du registre de lecture aux moyens pour conserver en mémoire le numéro spécial et pour la relier au registre-mémoire déterminé après l'émission du numéro spécial.

Avantageusement, le circuit de commande de l'émetteur d'impulsions d'appel comprend des moyens pour empêcher l'émission du numéro d'appel après l'émission du numéro spécial et des moyens commandés par le détecteur de la tonalité d'invitation à transmettre pour commencer l'émission du numéro d'appel après réception de la tonalité d'invitation à transmettre.

Ainsi, tout cycle d'émission commence par l'émission préalable du numéro spécial. L'émission est ensuite suspendue, l'appareil étant mis en attente de la tonalité d'invitation à transmettre. Lorsque celle-ci est détectée, l'émission du numéro d'appel proprement dit est entreprise.

Avantageusement également, les moyens pour conserver en mémoire l'information indiquant si le générateur est ou non raccordé au réseau téléphonique par l'intermédiaire d'un autocommutateur et les moyens pour conserver en mémoire le numéro spécial à émettre en vue de la prise directe du réseau sont formés par au moins une partie d'un des registres-mémoires de la mémoire des numéros d'appels.

Ceci permet d'une part d'éviter de prévoir des mémoires spécialement à cet effet et d'autre part d'assurer la conservation de ces informations même lorsque l'appareil n'est plus sous tension. On sait en effet que dans ce type d'appareil, des moyens sont prévus pour éviter la perte des informations contenues dans la mémoire des numéros d'appels quand l'appareil est déconnecté.

Un autre but de la présente invention est de fournir un générateur automatique d'appels téléphoniques qui soit capable de calculer et d'afficher le prix de la communication au fur et à mesure de son déroulement.

On rappelle que dans le mode habituel de taxation des communications téléphoniques, deux facteurs de tarification sont utilisés, d'une part une unité de taxation appelée taxe de base, unique pour toutes les taxations dans le pays, et d'autre part un échelon de taxe à appliquer à partir de la réponse du demandé. Le nombre d'unités enregistrées dépend de la nature et de la durée de la communication. La taxation est réalisée par impulsions périodiques, la période entre deux impulsions étant variable et d'autant plus courte que l'échelon de taxes est plus élevé. On appellera ci-après cette période entre deux impulsions la durée unitaire.
Cependant, certaines liaisons bénéficient du régime de la
taxe unique égale à une taxe de base.

Enfin, certains abonnés disposent de l'envoi par le central
auquel ils sont rattachés des impulsions périodiques servant
à la taxation de leurs communications. D'autres abonnés ne
disposent pas de ces impulsions.

On comprend par conséquent que la taxe de base est une
donnée permanente et commune à toutes les communications
téléphoniques. Par contre, la durée unitaire varie d'une
communication à l'autre en fonction du numéro d'appel.

Afin de permettre de calculer et d'afficher le prix de la
communication au fur et à mesure de son déroulement, la
présente invention prévoit un générateur automatique d'appels téléphoniques comprenant une mémoire comportant une
pluralité de registres-mémoires de capacité prédéterminée et
un registre de lecture des signaux numériques lus dans la
mémoire, chaque registre de mémoire pouvant contenir au
moins un numéro d'appel, caractérisé par le fait qu'il
comprend des moyens pour conserver en mémoire la valeur
d'une unité de taxation ou taxe de base, des moyens pour
ajouter au contenu d'un compteur la valeur de cette taxe de
base à des intervalles de temps réguliers égaux à une durée
unitaire, et des moyens pour afficher le contenu dudit
compteur.

Avantageusement, le générateur automatique d'appels téléphoniques selon l'invention comporte des moyens pour conserver
en mémoire une information indiquant s'il est branché ou non
à un central téléphonique lui fournissant des impulsions
périodiques auxdits intervalles de temps réguliers et des
moyens pour, dans le cas où cette information est positive,
ajouter la valeur de la taxe de base au contenu du compteur
à chaque réception de ladite impulsion.

Il est en effet inutile dans ce cas de disposer de la durée unitaire relative à chaque appel puisque les impulsions de taxation sont fournies par le central.

Par contre, dans le cas où le générateur est prévu pour pouvoir être branché sur un central téléphonique ne fournissant pas d'impulsions périodiques, il comprend avantageusement des moyens pour enregistrer la durée unitaire affectée à au moins un numéro d'appel, ladite durée unitaire étant inscrite dans le registre-mémoire de ce numéro d'appel après le numéro d'appel et un premier signal spécial séparant le numéro d'appel et la durée unitaire, et des moyens sont prévus pour relier la sortie desdits moyens pour enregistrer la durée unitaire aux moyens pour ajouter au contenu d'un compteur la valeur de la taxe de base.

La durée unitaire affectée à chaque numéro d'appel est par conséquent inscrite en mémoire à la suite de celui-ci après interposition d'un premier signal spécial. Lorsque le registre-mémoire contenant ce numéro d'appel est adressé, la valeur de la durée unitaire est transférée dans des moyens dont la sortie est reliée aux moyens prévus pour effectuer le calcul de la taxe.

Dans le cas où la présente invention est mise en oeuvre dans un générateur automatique d'appels téléphoniques dans lequel un registre-mémoire ne contenant pas de durée unitaire à la suite du numéro d'appel peut contenir un deuxième numéro d'appel également séparé du premier numéro d'appel par ledit premier signal spécial et dans lequel un deuxième signal spécial occupe les emplacements de mémoire non utilisés, on prévoit avantageusement des moyens pour détecter si le caractère d'un rang prédéterminé, rencontré après le premier signal spécial qui suit un numéro d'appel est un deuxième signal spécial, et des moyens pour, dans l'affirmative, valider les moyens pour ajouter au contenu d'un compteur la valeur de la taxe de base.

En effet, on convient que dans le cas où un registre-mémoire contient deux numéros d'appels, ceux-ci sont des numéros locaux pour lesquels il n'y a pas lieu de calculer la taxe. Par conséquent, lorsqu'à la suite d'un numéro d'appel un premier signal spécial est rencontré, il y a lieu de savoir si ce qui suit ce signal spécial est une durée unitaire ou un deuxième numéro d'appel. Comme les durées unitaires sont inscrites en mémoire sur un nombre d'emplacements prédéterminés, on analyse le caractère qui suit immédiatement ce nombre prédéterminé. Dans le cas où ce caractère est un chiffre, on est en présence d'un deuxième numéro d'appel. Par contre, dans le cas où ce caractère est un deuxième caractère spécial, on sait qu'il s'agit d'une durée unitaire et qu'il y a lieu alors de calculer la taxe.

Toutefois, dans le cas où le générateur automatique d'appels téléphoniques selon l'invention est muni, comme cela a été mentionné ci-dessus, de moyens pour détecter si les deux premiers chiffres du numéro d'appel sélectionnés forment un préfixe, le processus visant à savoir s'il y a lieu ou non de calculer la taxe peut être simplifié dans certains cas. En effet, si certains numéros locaux, c'est-à-dire ne comportant pas de préfixe, entraînent néanmoins le calcul d'une taxe proportionnelle, on sait que tous les numéros affectés d'un préfixe entraînent le calcul d'une telle taxe.

On prévoit donc avantageusement dans ce cas que lesdits moyens pour détecter si les deux premiers chiffres du numéro d'appel sélectionné forment un préfixe sont agencés également pour valider les moyens pour ajouter au contenu d'un compteur la valeur de la taxe de base.

Il est ainsi inutile de passer par l'étape consistant à détecter si le caractère d'un rang prédéterminé rencontré après le premier signal spécial qui suit un numéro d'appel, est un deuxième caractère spécial.

-12-

Selon un mode de réalisation préféré de l'invention, lesdits moyens pour conserver en mémoire la valeur d'une unité de taxation sont formés par au moins une partie d'un des registres-mémoires de la mémoire des numéros d'appels.

On a déjà vu ci-dessus les avantages résultant de la conservation dans la mémoire des numéros d'appels de données permanentes.

De même, les moyens pour conserver en mémoire l'information indiquant si le générateur automatique d'appels téléphoniques selon l'invention est branché ou non à un central téléphonique lui fournissant des impulsions périodiques auxdits intervalles de temps réguliers, peuvent être formés par au moins une partie d'un des registres-mémoires de la mémoire des numéros d'appels.

Dans le cas où un des registres-mémoires de la mémoire des numéros d'appels contient de telles informations permanentes on prévoit que le générateur automatique d'appels téléphoniques selon l'invention comprend un circuit d'initialisation apte à la mise sous tension du générateur à adresser ledit registre-mémoire contenant les informations, à déclencher un cycle de lecture de ce registre-mémoire et à transférer le contenu de ce registre-mémoire dans des mémoires de travail.

D'autres caractéristiques et avantages de la présente invention apparaîtront dans la description qui suit, donnée à titre d'exemple non limitatif d'une de ses formes de réalisation.

Dans cette description, on se référera pour plus de simplicité, et sans qu'il y ait là une limitation quelconque, au générateur automatique d'appels téléphoniques décrit dans le brevet français n° 74.36.317. On ne décrira donc, ci-dessous, que les parties de ce générateur modifiées afin de mettre en oeuvre la présente invention. Les éléments communs à l'invention et au brevet ci-dessus seront désignées par la même référence.

Aux dessins schématiques annexés :

- la figure 1 est un schéma d'ensemble du dispositif selon l'invention,

- la figure 2 est un schéma du circuit selon l'invention visant à analyser le contenu d'un registre-mémoire,

- la figure 3 est un schéma du circuit selon l'invention visant à calculer et à afficher le prix de la communication au fur et à mesure de son déroulement,

- la figure 4 est un diagramme de temps représentant la mise sous tension de l'appareil, et

- la figure 5 est un diagramme des temps représentant le fonctionnement des compteurs utilisés dans la figure 3.

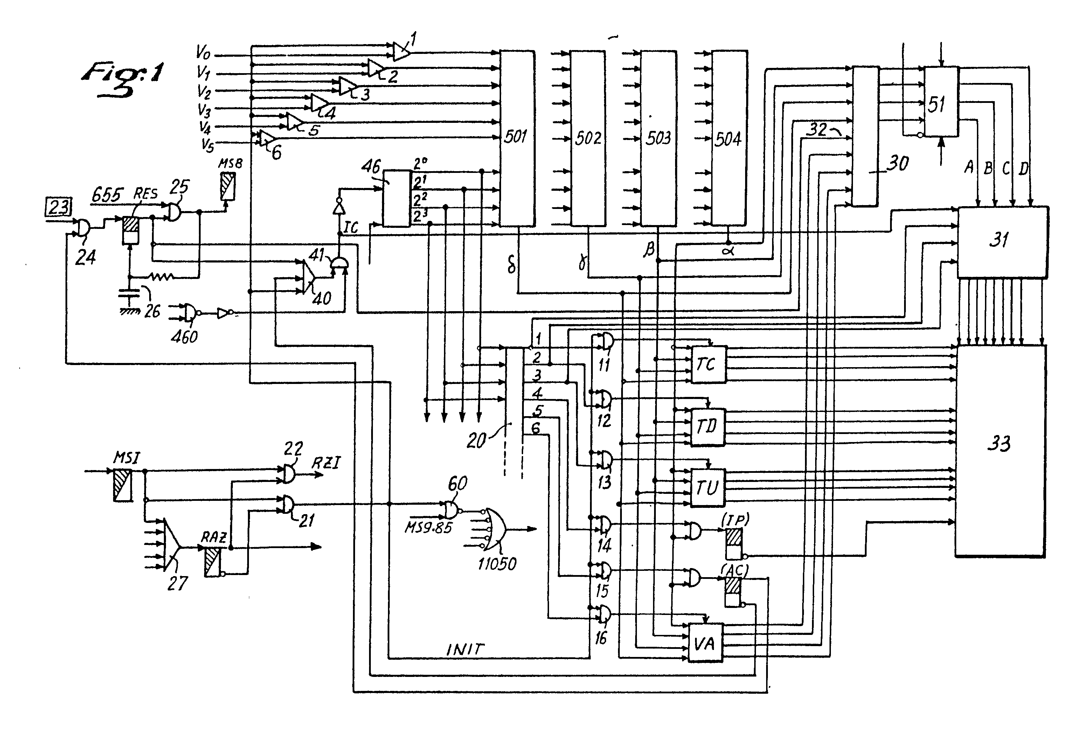

Comme montré à la figure 1, la mémoire de numéros d'appels du générateur automatique d'appels téléphoniques selon l'invention est formée de quatre modules 501, 502, 503 et 504. Ces modules ont 1024 bits chacun et sont destinés à contenir respectivement les bits alpha, beta, gamma et delta correspondant aux chiffres décimaux des numéros d'appels. Chaque module 501 à 504 est constitué par une matrice de 32 lignes et 32 colonnes, chaque colonne constituant deux registres-mémoires de 16 bits chacun soit 64 registres au total.

Ces registres sont adressés aux moyens des entrées V0, V1, V2, V3, V4 et V5 appliqués aux entrées d'adressage des modules 501 à 504 par l'intermédiaire de porte OU 1, 2, 3, 4, 5 et 6 respectivement dont la fonction sera décrite ci-

-14-

après. Les différents bits de chaque registre sont adressés par un compteur 46 dont les sorties $2^0$, $2^1$, $2^2$, et $2^3$ sont appliquées aux entrées d'adresses de lignes des modules 501 à 504. Par conséquent, le registre-mémoire d'un numéro d'appel sélectionné est adressé par les signaux V0 à V5 et chaque chiffre particulier de ce numéro est adressé par les signaux $2^0$ à $2^3$ issus du compteur 46.

Les sorties alpha, beta, gamma et delta des mémoires 501 à 504 sont tout d'abord connectées à un certain nombre de mémoires formées de bascules du type LATCH. Il s'agit tout d'abord des ensembles de 4 bascules TC, TD, TU et VA dont chaque entrée est reliée respectivement à une des sorties alpha, beta, gamma et delta de la mémoire, et d'autre part de deux bascules (IP) et (AC) reliées toutes deux à la sortie alpha de la mémoire. Les entrées des mémoires TC, TD, TU, (IP), (AC) et VA sont validées respectivement par des signaux fournis par des portes ET 11, 12, 13, 14, 15 et 16. Ces portes ET 11 à 16 reçoivent d'une part respectivement les signaux issus des sorties 1 à 6 d'un décodeur 20 dont les entrées sont reliées aux sorties du compteur 46. Les mémoires TC, TD, TU, (IP), (AC) et VA seront donc successivement validées lorsque le compteur 46 adressera le premier bit des mémoires, le deuxième, le troisième, le quatrième, le cinquième et le sixième.

Sur leur autre entrée les portes ET 11 à 16 reçoivent un signal INIT issu d'une porte ET 21 dont le fonctionnement sera décrit ci-après.

Par ailleurs, les sorties alpha, beta, gamma et delta des mémoires 501 à 504 sont reliées à l'un des groupes d'entrées d'un sélecteur deux voies 30. L'autre groupe d'entrées de ce sélecteur est relié aux quatre sorties des bascules VA. Les sorties du sélecteur 30 sont reliées aux entrées du compteur-décompteur ou registre de lecture 51 dont les sorties A, B,

C, D sont connectées au module d'analyse du numéro 31 décrit plus en détail ci-après.

Le sélecteur deux voies 30 possède une entrée 32 telle que, lorsqu'elle est à 1, c'est le deuxième groupe d'entrées du sélecteur 30 qui est sélectionné, c'est-à-dire celles qui sont reliées aux sorties des bascules VA, et telle que, lorsqu'elle est à zéro, c'est le premier groupe d'entrées du sélecteur 30 qui est sélectionné, c'est-à-dire celles qui sont reliées aux sorties alpha, beta, gamma et delta de la mémoire. Cette entrée 32 est reliée à la sortie d'une bascule $\overline{RES}$ dont le fonctionnement sera décrit ci-après.

Enfin, les sorties des bascules TC, TD et TU, de même que la sortie $\overline{IP}$ de la bascule (IP) sont reliées à un module 33 de calcul de la taxe qui sera décrit plus en détail ci-après. A l'entrée de ce module 33 sont également reliées les sorties du module 31.

La porte ET 21 reçoit à une de ses entrées la sortie d'un monostable MSI susceptible d'être déclenché automatiquement à la mise sous tension de l'appareil. La sortie du monostable MSI est également appliquée par l'intermédiaire d'une porte OU 27 à l'entrée d'un deuxième monostable RAZ de durée plus courte que le monostable MSI. La sortie 1 du monostable RAZ, de même que la sortie 1 du monostable MSI sont appliquées aux entrées d'une porte ET 22 tandis que la sortie zéro du monostable RAZ est appliquée à l'autre entrée de la porte ET 21.

Par ailleurs, la bascule $\overline{RES}$ est mise à 1 par le signal issu d'une porte ET 24 recevant à une de ses entrées le signal 23 d'effacement du générateur décrit dans le brevet français 74.36317 et à son autre entrée la sortie 1 de la bascule (AC) mentionnée ci-dessus. La sortie de la bascule $\overline{RES}$ est appliquée à une entrée d'une porte ET 25 dont l'autre entrée reçoit le signal issu de la porte 655 du générateur

-16-

décrit dans le brevet français ci-dessus. La sortie de la porte 25 est appliquée à l'entrée remise à zéro du monostable MS8 de ce même générateur ainsi qu'à l'entrée remise à zéro de la bascule $\overline{RES}$ par l'intermédiaire d'un circuit à résistance et capacité 26.

Comme cela a été vu précédemment, la sortie de la bascule $\overline{RES}$ est appliquée d'une part à l'entrée 32 du sélecteur de voies 30. Elle est appliquée également à une des entrées d'une porte OU 40 à trois entrées qui reçoit sur une de ses autres entrées le signal INIT mentionné ci-dessus, et sur sa troisième entrée le signal provenant de la sortie zéro de la bascule (AC). La sortie inversée de la porte 460 de commande du compteur 46, décrite dans le brevet sus-mentionné, est maintenant appliquée à ce compteur 46 par l'intermédiaire d'une porte ET 41 qui reçoit sur une de ses entrées cette sortie, et sur son autre entrée la sortie de la porte OU 40. La sortie de la porte ET 41 est appliquée d'une part au compteur 46 et d'autre part à une des entrées du module d'analyse du numéro 31.

On examinera maintenant le fonctionnement du circuit de la figure 1.

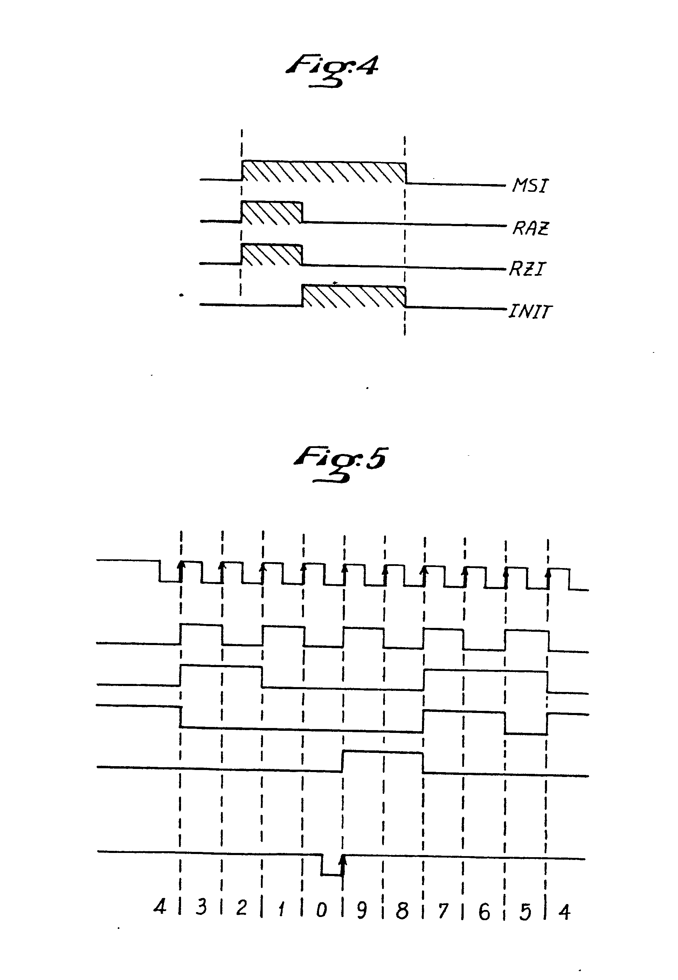

A la mise sous tension de l'appareil, le monostable MSI est déclenché. Sa sortie 1 passe à 1 et par l'intermédiaire de la porte OU 27 déclenche le second monostable RAZ de durée plus courte (voir diagramme de temps à la figure 4). Le signal RAZ est celui qui est utilisé dans l'appareil décrit dans le brevet français n° 74.36.317. La porte OU 27 qui déclenche son action reçoit outre le signal provenant du monostable MSI, les autres conditions prévues dans ce brevet.

La sortie RZI de la porte 22 déclenche une remise à zéro unique à la mise sous tension et la sortie de la porte 21 est le signal INIT.

Le signal INIT est appliqué d'une part aux entrées des portes OU 1 à 6 et ainsi aux entrées d'adressage des mémoires 501 à 504. Le registre 63 est donc sélectionné.

Le registre-mémoire 63 est organisé de la façon suivante.

Les trois premiers chiffres servent à enregistrer la taxe de base, par exemple 047.

Le chiffre suivant est un 1 si l'appareil reçoit du central auquel il est relié, les impulsions périodiques de taxation, ou un zéro s'il ne les reçoit pas.

Le chiffre suivant est un 1 si l'appareil est relié à un autocommutateur, ou le chiffre zéro s'il ne l'est pas.

Le chiffre suivant indique la valeur du numéro spécial si l'appareil est relié à un autocommutateur.

Enfin, le reste de la mémoire est rempli par le deuxième signal spécial (blanc) lorsqu'on appuie sur la touche fin d'enregistrement comme cela est décrit au brevet français n° 74.36.317.

Le registre-mémoire 63 aura ainsi par exemple le contenu suivant.

0 4 7 0 1 0 B B B B B B B B B B

Les trois premiers chiffres représentent le montant 047 de la taxe de base. Le quatrième chiffre égal à zéro indique que l'on ne reçoit pas les impulsions périodiques de taxation. Le cinquième chiffre égal à 1 indique que l'on est relié à un autocommutateur, et le sixième chiffre égal à zéro indique que la valeur du numéro spécial est zéro. Le reste de la mémoire est rempli par des blancs.

Le signal INIT est par ailleurs appliqué à une entrée d'une porte NAND 60 qui reçoit par ailleurs le signal MS9.85 de la porte 850 du brevet français 74.36.317. La sortie de cette porte 60 est appliquée à l'entrée d'une porte 11050 qui remplace la porte 1105 de ce brevet et dont les autres entrées sont identiques à celles de cette porte 1105. Le signal INIT déclenche par conséquent un cycle de lecture rapide au cours duquel le compteur ordinal 46 adresse successivement les 16 mémoires successives du registre-mémoire sélectionné, c'est-à-dire du registre-mémoire n° 63 des constantes. Les sorties $2^0$ à $2^3$ du compteur ordinal 46 sont décodées dans le décodeur décimal 20. On a donc aux sorties 1, 2, 3, 4, 5 et 6 du décodeur 20 le rang du caractère lu.

Le signal INIT provoque par conséquent l'entrée dans la mémoire TC du chiffre des centaines de la taxe de base, l'entrée dans la mémoire TD du chiffre des dizaines de cette taxe, l'entrée dans la mémoire TU du chiffre des unités dans cette taxe, et l'entrée dans la mémoire VA du numéro spécial si l'appareil est relié à un autocommutateur. Par ailleurs, le quatrième chiffre du registre-mémoire 63 est transféré dans la bascule (IP) de sorte que celle-ci passe à 1 si l'appareil reçoit les impulsions périodiques, et le cinquième chiffre du registre-mémoire 63 est transféré dans la bascule (AC) de sorte que celle-ci passe à 1 si l'appareil est relié à un autocommutateur.

On examinera maintenant comment, dans le cas où l'on est relié à un autocommutateur, est réalisée l'émission du numéro spécial.

Dans ce cas, la sortie 1 de la bascule (AC) est à 1 et valide la porte 24. On a vu que cette porte reçoit sur sa deuxième entrée le signal 23 qui déclenche par ailleurs dans le brevet français 74.36.317 le cycle d'analyse rapide du numéro par l'intermédiaire du monostable MS9, cycle qui sera décrit ci-dessous.

La sortie de la porte 24 met à 1 la bascule $\overline{RES}$ (réseau) c'est-à-dire que, par l'intermédiaire de l'entrée 32 du sélecteur deux voies 30, ce sont les entrées de la mémoire VA qui sont sélectionnées de sorte que les sorties du sélecteur 30 correspondant à ces entrées sont appliquées aux entrées du compteur-décompteur 51. Le cycle d'émission qui suit émet par conséquent le numéro spécial.

On sait qu'à la fin de chaque cycle d'émission apparaît à la sortie de la porte 655 du brevet français 74.36317 un signal déclenchant le monostable MS8 du générateur de numérotation. Dans le cas présent, ce signal est également utilisé pour remettre à zéro la bascule $\overline{RES}$. On est donc en position "réseau" pour le reste de l'émission c'est-à-dire que les données parvenant au compteur-décompteur 51 sont celles provenant de la mémoire des numéros d'appels.

Toutefois il faut, après l'émission du numéro spécial, que l'appareil soit placé en position d'attente de tonalité pour ne commencer l'émission du numéro d'appel proprement dit qu'après la réception de la tonalité d'invitation à transmettre. Ce résultat est obtenu par la porte 25 qui reçoit d'une part la sortie de la bascule $\overline{RES}$ et par ailleurs la sortie de la porte 655. La sortie de la porte 25 est appliquée à l'entrée remise à zéro du monostable MS8, ce qui l'empêche de se déclencher. La porte 651 du même brevet a sa sortie qui passe à 1 et qui valide l'attente de la tonalité du réseau. Ce même signal remet à zéro, après un retard obtenu par le circuit résistance capacité 26, la bascule $\overline{RES}$.

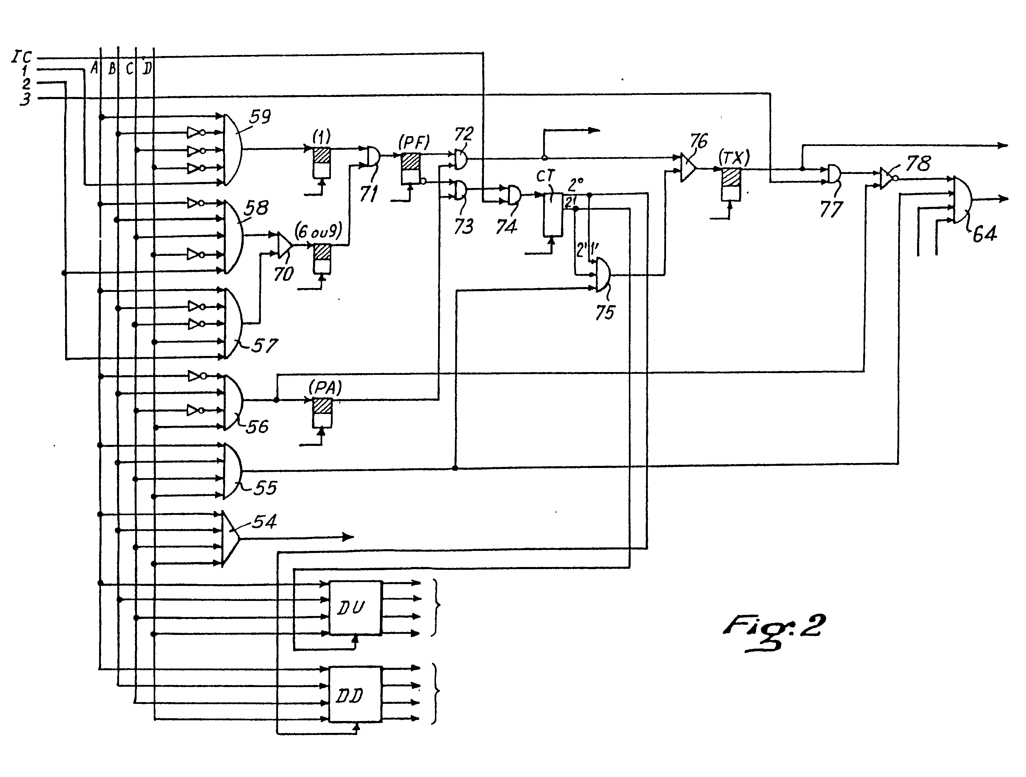

On décrira maintenant en référence à la figure 2, le circuit 31 d'analyse du numéro sélectionné.

On sait que l'émission d'un numéro d'appel préalablement sélectionné déclenche tout d'abord un cycle de lecture rapide. Si aucun caractère spécial n'est inscrit à la suite

-20-

d'un préfixe éventuel, il devient nécessaire d'analyser les deux premiers chiffres du numéro pour savoir s'ils correspondent à un préfixe.

Dans le brevet français 74.36.317, les sorties A, B, C, D du registre de lecture 51 sont appliquées aux entrées de portes 54, 55 et 56. La porte 54 est une porte OU qui détecte le signal indiquant que le registre de lecture est vide. La porte 55 détecte si le caractère contenu dans le registre 51 est un blanc (1111) et la porte 56 détecte si le caractère contenu dans le registre 51 est une pause (1010).

Le circuit 31 comprend en outre une porte 57 qui détecte si le caractère contenu dans le registre de lecture 51 est un 9 (1001), une porte (58) qui détecte si le caractère contenu dans le registre de lecture 51 est un 6 (0110), et une porte 59 qui détecte si le caractère contenu dans le registre de lecture 51 est un 1 (0001). La porte 59 est validée par le signal 1 du décodeur 20 et les portes 57 et 58 sont validées par le signal 2 de ce même décodeur 20.

La sortie de la porte 59 est appliquée à l'entrée d'une bascule (1) et les sorties des portes 57 et 58 sont appliquées par l'intermédiaire d'une porte OU 70 à l'entrée d'une bascule (6 ou 9). Les sorties des bascules (1) et (6 ou 9) sont appliquées aux deux entrées d'une porte ET 71.

Par ailleurs, la sortie de la porte 56 est appliquée à l'entrée d'une bascule (PA) et la sortie de la porte 71 est appliquée à l'entrée d'une bascule (PF).

Les sorties 1 des bascules (PA) et (PF) sont appliquées aux deux entrées d'une porte ET 72, et la sortie 1 de la bascule (PA) ainsi que la sortie zéro de la bascule (PF) sont appliquées aux entrées d'une porte ET 73.

La sortie de la porte 73 est appliquée à une des entrées d'une porte ET 74 dont l'autre entrée reçoit le signal IC de la porte 41 de la figure 1. La sortie de cette porte 74 est appliquée à l'entrée d'un compteur CT dont les sorties $2^0$ et $2^1$, appelées respectivement 1' et 2', sont appliquées aux deux premières entrées d'une porte ET 75 à trois entrées qui reçoit par ailleurs le signal issu de la porte 55. La sortie de la porte 75 est appliquée avec la sortie de la porte 72 à l'entrée d'une porte OU 76 dont la sortie est appliquée à l'entrée d'une bascule (TX).

La sortie de la bascule (TX) est appliquée à une des entrées d'une porte ET 77 qui est validée par le signal 3 issu du décodeur décimal 20. La sortie de cette porte 77 est appliquée à une des entrées d'une porte NOR 78 dont l'autre entrée reçoit la sortie de la porte 56. La sortie de la porte 78 est appliquée à la porte 64 du brevet français 74.36.317 à la place de l'entrée $\overline{PL}$.

Enfin, les sorties A, B, C, D du registre de lecture 51 sont également appliquées aux entrées de mémoires DU et DD qui sont respectivement validées par les signaux 2' et 1' du compteur CT.

On voit par conséquent que la bascule (1) passe à 1 si le premier caractère lu dans le registre 51 est un 1, et que la bascule (6 ou 9) passe à 1 si le deuxième caractère lu dans le registre 51 est un 6 ou un 9. Par conséquent, la bascule (PF) passe à 1 si d'une part le premier caractère est un 1 et si, d'autre part, le deuxième est un 6 ou un 9 c'est-à-dire si le numéro d'appel sélectionné comporte un préfixe. La bascule (TX) passe alors à 1 indiquant ainsi que le calcul de la taxe doit être effectué.

On décrira maintenant une variante du circuit décrit ci-dessus d'analyse du numéro.

On a supposé en effet jusqu'à présent que les deux seuls préfixes possibles étaient les préfixes 16 et 19. Ceci est vrai actuellement sur le réseau français, mais il n'en est pas de même dans la plupart des pays étrangers. Non seulement, dans ces pays, les préfixes peuvent être différents de 16 ou de 19, mais en plus ils peuvent être soit à un soit à deux chiffres. Enfin, dans certains pays, le même préfixe est utilisé à la fois pour l'interurbain et pour l'international.

L'agencement décrit ci-dessous permet de déterminer dans le cas général si le premier chiffre ou les deux premiers chiffres constituent un préfixe.

On a exposé ci-dessus comment était organisé le registre-mémoire 63. Ses six premiers emplacements de mémoire contiennent des constantes tandis que le reste du registre est rempli par des blancs.

Dans la présente variante, la valeur des préfixes n'est pas cablée, comme cela était le cas avec les portes 57, 58 et 59, mais est inscrite dans un registre-mémoire par exemple dans le registre-mémoire 63 à la suite des six premiers emplacements.

Dans ce cas, le septième chiffre du registre-mémoire 63 est un 1 si ce qui suit est un préfixe à un chiffre, et un 2 si ce qui suit est un préfixe à deux chiffres. Le huitième, et éventuellement le neuvième, emplacements de mémoire contiennent le ou les chiffres du préfixe dont la longueur est indiquée dans le septième emplacement de mémoire. Dans le cas d'un préfixe unique pour l'interurbain et pour l'international, le reste de la mémoire est rempli par des blancs.

Dans le cas où les préfixes interurbain et international sont différents, le chiffre qui suit le premier préfixe, c'est-à-dire le neuvième ou le dixième emplacement de mé-

-23-

moire, est un 1 si le deuxième préfixe est un préfixe à un chiffre, et un 2 si le deuxième préfixe est un préfixe à deux chiffres. A la suite de ce chiffre, c'est-à-dire dans le dixième ou onzième emplacement de mémoire et éventuellement dans le onzième ou le douzième, est indiquée la valeur du second préfixe.

On donnera maintenant quelques exemples du contenu du registre-mémoire 63 tel qu'il vient d'être défini, ses six premiers chiffres étant les mêmes que ceux indiqués ci-dessus.

Dans le cas du réseau français actuel, on sait que les deux seuls préfixes possibles sont 16 et 19.

Le contenu du registre 63 sera alors le suivant :

0 4 7 0 1 0 2 1 9 2 1 6 B B B B

Chacun des 2 se trouvant au septième et au dizième emplacements de mémoire, indiquent que les deux emplacements de mémoire qui les suivent concernent un même préfixe.

Dans le cas où le préfixe international est le chiffre 00 et où le préfixe interurbain est le 0, on aura le contenu suivant pour le registre-mémoire 63 :

0 4 7 0 1 0 2 0 0 1 0 B B B B B

Le 2 du septième emplacement de mémoire indique que les deux chiffres suivants constituent un préfixe et le 1 du dixième emplacement de mémoire indique que le chiffre qui le suit forme un préfixe à lui seul.

Dans le cas où le seul préfixe 00 est affecté à la fois à l'interurbain et à l'international, on aura pour le registre-mémoire 63 le contenu suivant :

-24-

0 4 7 0 1 0 2 0 0 B B B B B B

Dans cette variante, le circuit de la figure 1 comprendra alors, outre les mémoires TC, TD, TU, (IP), (AC) et VA deux autres mémoires susceptibles de recevoir les valeurs des préfixes. L'entrée dans ces mémoires sera validée par les sorties 7 à 12 du décodeur 20.

Le circuit de la figure 2 sera également modifié en supprimant les portes 57 à 59 et en les remplaçant par des portes susceptibles de comparer les sorties A, B, C, D du registre 51 avec le contenu des mémoires dans lesquelles auront été transférées les valeurs des préfixes.

On comprend que cet agencement donne une plus grande souplesse au dispositif puisqu'il est immédiatement adaptable sur des réseaux téléphoniques autres que le réseau français actuel, l'adaptation pouvant être de plus effectuée par l'utilisateur lui-même par une simple modification au moyen du clavier du registre-mémoire 63.

Le calcul de la taxe peut également devoir être effectué même si le numéro d'appel sélectionné ne comporte pas de préfixe. A cet effet, le contenu d'un registre-mémoire est organisé de la façon suivante.

Le numéro d'appel est tout d'abord inscrit avec éventuellement son préfixe puis, si le calcul de la taxe doit être effectué, un caractère "pause" est inscrit à la suite du numéro d'appel, et après le caractère "pause" est inscrite la durée unitaire. Dans le cas où la taxe ne doit pas être calculée, un autre numéro d'appel peut être inscrit également à la suite d'un caractère "pause".

Par conséquent, d'une part la bascule (TX) n'est mise à 1, dans le cas où l'on a lu un préfixe, que si la bascule (PA) indique que l'on a lu également un caractère "pause" grâce à la porte 72. D'autre part, si l'on a lu un caractère "pause", il faut savoir s'il précède un second numéro d'appel ou une durée unitaire affectée au premier numéro d'appel. A cet effet, on continue l'analyse en recherchant si le troisième caractère après le caractère "pause" est un blanc ou non. Si ce caractère est un blanc, il s'agit d'une durée unitaire et la bascule (TX) est mise à 1. Ceci est réalisé par la porte 74 qui reçoit d'une part le signal $\overline{PF}.PA$ de la porte 73, et d'autre part les impulsions de comptage IC du compteur ordinal. Les impulsions sortant de la porte 74 déclenchent le compteur CT. Par conséquent, les sorties $2^0$ et $2^1$ de ce compteur seront à 1 l'orsqu'on lira le troisième caractère suivant un caractère "pause". La porte 75 détermine si ce troisième caractère est un blanc. Dans ce cas, les indications qui suivent le numéro d'appel constituent une durée unitaire et la bascule (TX) est mise à 1.

Simultanément, les sorties du compteur CT ont provoqué l'entrée dans les mémoires DU et DD respectivement du deuxième et du premier caractères suivant le caractère "pause". Si le calcul du prix de la communication doit être effectué, il s'agit de la durée unitaire qui sera utilisée ultérieurement dans le module 33 de calcul du prix, et si ce calcul ne doit pas être effectué ces indications resteront inutilisées.

Après l'analyse du numéro, telle que décrite ci-dessus, et éventuellement l'émission du chiffre spécial, commence l'émission du numéro d'appel proprement dit. Cette émission est identique à ce qui est décrit dans le brevet français n° 74.36.317 si ce n'est qu'on ne détecte pas de caractère "pause" après le préfixe.

On remplace par conséquent l'entrée $\overline{PL}$ de la porte 64 par le signal $\overline{(3.TX)} + \overline{PL}$ qui indique que le numéro d'appel ne comporte pas de préfixe.

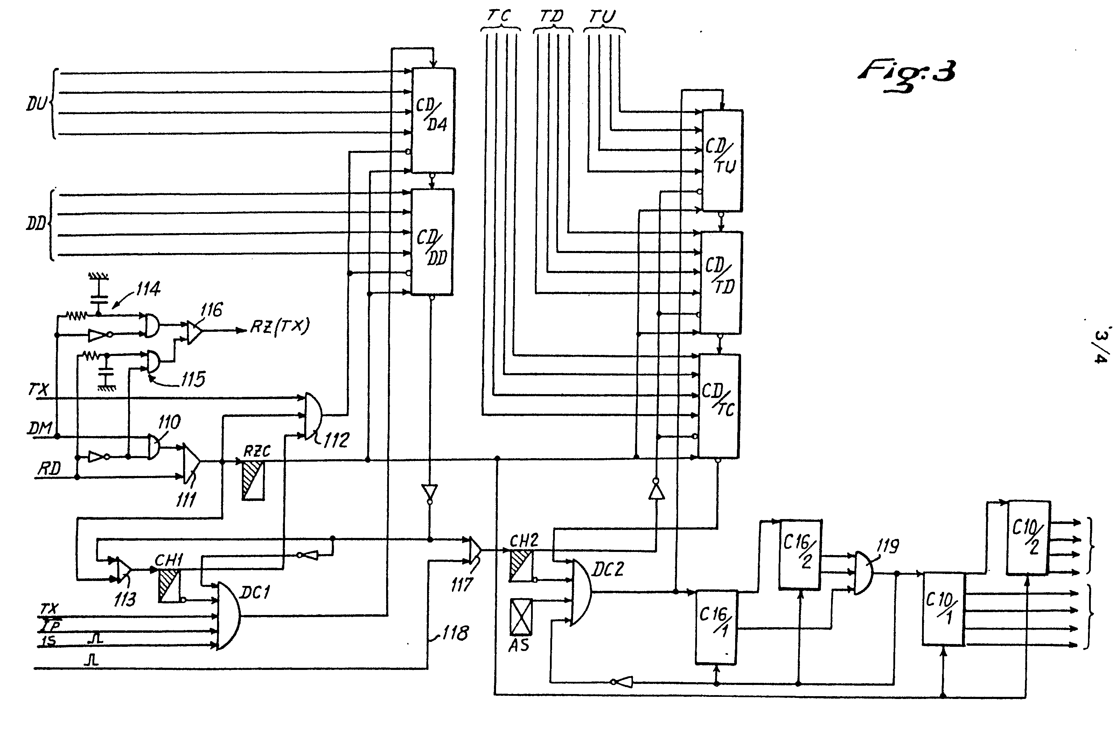

On décrira maintenant en référence à la figure 3 le module 33 de calcul du prix de la communication.

Dans la description ci-dessous les signaux RD et DM sont ceux du brevet français 74.36.317.

Le calcul du prix de la communication doit intervenir à partir du moment où le correspondant décroche son combiné. Ce moment est connu dans le brevet ci-dessus par la détection de l'inversion de polarité de la ligne, c'est-à-dire lorsque le signal RD (réponse du demandeur) est obtenu. Toutefois, lorsque l'appareil est branché derrière un autocommutateur, on ne dispose pas de cette inversion de polarité sur la ligne aboutissant à l'appareil. C'est donc le décrochage du demandeur (qui fournit le signal DM) au moment où il entend le correspondant grâce au haut-parleur incorporé qui doit déclencher le calcul.

Enfin, reste le cas de l'appareil ne comportant pas de poste téléphonique incorporé et qui est branché sur un appareil d'interphone. Dans ce cas, il est nécessaire de prendre une ligne, c'est-à-dire de décrocher le combiné avant de lancer l'appel.

Le circuit décrit ci-dessous permet de déclencher le calcul après la fin d'émission du numéro et,

- si le signal RD arrive avant le signal DM,

- si on reçoit DM non suivi de RD (cas de l'autocommutateur),

- si DM est suivi de RD (intercom).

Le signal DM et le signal RD inversés sont appliqués aux entrées d'une porte ET 110. La sortie de cette porte et le signal RD sont appliqués aux entrées d'une porte OU 111. La sortie de la porte 111 est appliquée d'une part à une des entrées d'une porte ET à 3 entrées 112, d'autre part à l'entrée d'un monostable RZC et enfin à une des deux entrées d'une porte OU 113. Les deux autres entrées de la porte 112 reçoivent respectivement le signal TX, et la sortie 1 d'un monostable CH1 dont l'entrée reçoit la sortie de la porte 113.

Deux circuits générateurs d'impulsions 114 et 115 reçoivent respectivement les signaux DM et $\overline{DM}$ et RD et $\overline{RD}$. Les sorties des circuits générateurs d'impulsions 114 et 115 sont appliquées aux entrées d'une porte OU 116.

Les sorties des mémoires DU et DD sont reliées à deux compteurs-décompteurs CD/DU et CD/DD dont les entrées sont validées par le signal issu de la porte ET 112. Les entrées remises à zéro de ces deux compteurs-décompteurs sont reliées à la sortie du monostable RZC. Par ailleurs, ces deux compteurs-décompteurs sont reliés en série, c'est-à-dire que le signal "VIDE" du compteur CD/DU est appliqué à l'entrée de décomptage du compteur CD/DD. L'entrée de décomptage du compteur CD/DU est reliée pour sa part à la sortie d'une porte ET DC1 qui reçoit sur une de ses entrées le signal "VIDE" du compteur CD/DD, sur sa deuxième entrée la sortie zéro du monostable CH1, sur sa troisième entrée le signal TX, sur sa quatrième entrée la sortie zéro de la bascule (IP) (voir figure 1), et sur sa cinquième entrée des impulsions espacées d'une durée d'une seconde.

Les compteurs-décompteurs CD/DU et CD/DD fonctionnent de la manière suivante (figure 5). La sortie "VIDE" de ces compteurs passe de zéro à 1 lorsqu'une impulsion de décrémentation est appliquée à leur entrée de décomptage alors qu'ils sont à zéro. Par conséquent, lorsque les deux compteurs CD/DU et CD/DD sont chargés et que des impulsions de décrémentation sont appliquées à l'entrée de décomptage du compteur CD/DU, celui-ci est décrémenté d'une unité jusqu'à ce qu'il soit à zéro. Sa sortie "VIDE" passe alors à 1 et décrémente d'une unité le compteur CD/DD. Le cycle recommence jusqu'à ce que le compteur CD/DD soit lui-même à zéro, c'est-à-dire jusqu'à ce que son signal "VIDE" passe à 1.

Comme cela a été mentionné ci-dessus, ce signal "VIDE" est appliqué à la première entrée de la porte DC1. Il est également appliqué par l'intermédiaire d'un inverseur à une des entrées de la porte OU 113 ainsi qu'à une des entrées d'une porte OU 117. L'autre entrée de la porte 117 reçoit une ligne 118 sur laquelle sont envoyées les impulsions périodiques de taxation lorsque l'appareil est relié à un central téléphonique qui les fournit.

Les sorties des mémoires TC, TD et TU (figure 1) sont reliées aux entrées de trois compteurs-décompteurs CD/TU, CD/TD et CD/TC du même type que les compteurs-décompteurs CD/DU et CD/DD. L'entrée dans ces trois compteurs-décompteurs du contenu des mémoires TC, TD et TU est validée par le signal issu de la sortie du monostable CH2, et leur entrée remise à zéro est reliée à la sortie du monostable RZC. Ces trois compteurs-décompteurs sont également reliés en série, c'est-à-dire que la sortie "VIDE" du compteur CD/DU est reliée à l'entrée de décomptage du compteur CD/TD dont la sortie "VIDE" est elle-même appliquée à l'entrée de décomptage du compteur CD/TC. La sortie "VIDE" du compteur CD/TC est appliquée à une des entrées d'une porte ET DC2 dont la sortie est reliée à l'entrée de décomptage du compteur CD/TU. La porte ET DC2 reçoit par ailleurs la sortie zéro du monostable CH2 et la sortie d'un astable AS dont la fréquence est élevée par rapport à la seconde.

La sortie de la porte DC2 est par ailleurs reliée à l'entrée d'un compteur C16/1 dont la sortie est reliée à l'entrée d'un deuxième compteur C16/2. Une porte ET 119 est reliée aux sorties des compteurs C16/1 et C16/2 de telle sorte qu'elles passent à 1 lorsque le contenu de ces compteurs est égal à 100. La sortie de la porte 119 est reliée d'une part aux entrées remises à zéro des compteurs C16/1 et C16/2, et par l'intermédiaire d'un inverseur à la quatrième entrée de la porte ET DC2, et d'autre part à l'entrée d'un compteur C10/1, dont la sortie est reliée à l'entrée d'un compteur C10/2. Les sorties des compteurs C10/1 et C10/2 sont reliées à un dispositif d'affichage non représenté par exemple celui de l'appareil décrit dans le brevet français 74.36.317. Les entrées remises à zéro des compteurs C10/1 et C10/2 sont reliées à la sortie du monostable RZC.

Le circuit décrit ci-dessus fonctionne de la façon suivante. La remise à zéro des compteurs par le monostable RZC est effectuée lorsque celui-ci est déclenché par le signal RD+ (DM.$\overline{RD}$). Cette remise à zéro s'effectue donc :

- si RD est le premier des deux signaux,

- si DM est le premier des deux signaux,

- si RD est le deuxième signal (c'est alors lui en effet qui doit initialiser le calcul).

Par contre, cette remise à zéro ne s'effectuera pas si DM est le deuxième signal.

Ce même signal RD+ (DM.$\overline{RD}$) déclenche le monostable CH1 qui valide la porte 112. Par conséquent, si le signal TX est présent, le contenu des mémoires DU et DD est transféré dans les compteurs-décompteurs CD/DU et CD/DD.

Lorsque le monostable CH1 revient à zéro, il valide la porte DC1. Par conséquent, chaque seconde, une impulsion sort de cette autre porte et décrémente le compteur-décompteur CD/DU. Lorsque les deux compteurs CD/DU et CD/DD sont à zéro la sortie "VIDE" de CD/DD inhibe la porte DC1 et arrête par conséquent le décomptage. Le nombre de secondes écoulées est alors égal à la valeur de la durée unitaire.

En même temps, ce signal "VIDE" déclenche un nouveau cycle par la porte 113 et le monostable CH1.

Si l'abonné bénéficie de l'envoi par le central téléphonique, auquel il est relié, des impulsions périodiques, le signal $\overline{IT}$ est égal à zéro, et la porte DC1 est inhibée. Ce sont par conséquent ces impulsions périodiques elles-mêmes et non la sortie "VIDE" du compteur CD/DD qui, par l'intermédiaire de la porte 117, déclenchent une totalisation de la taxe unitaire comme cela sera décrit ci-dessous.

Lorsque l'un des deux correspondants (demandeur ou demandé) raccroche, l'un des deux générateurs d'impulsions 114 et 115 émet une impulsion RZ (TX) qui remet à zéro la bascule (TX) et arrête le processus.

Le signal sortant de la porte 117 déclenche le monostable CH2, ce qui assure le transfert dans les compteurs-décompteurs CD/TU, CD/TD et CD/TC du contenu des mémoires TU, TD et TC respectivement. Lorsque le monostable CH2 revient à zéro, il valide, par l'intermédiaire de sa sortie zéro, la porte DC2 de sorte que la sortie de cette dernière émet des impulsions à la fréquence de l'astable AS. Ces impulsions décrémentent les compteurs CD/TU, CD/TD et CD/TC comme cela a été vu ci-dessus à propos des compteurs CD/DU et CD/DD.

Par ailleurs, la sortie de la porte DC2 fait avancer les compteurs en séries C16/1 et C16/2. Lorsque le signal "VIDE" du compteur CD/TC passe à 1, le décomptage des compteurs CD/TU, CD/TD et CD/TC et le comptage des compteurs C16/1 et C16/2 s'arrêtent. Il est alors entré dans les compteurs C16/1 et C16/2 autant d'impulsions que la valeur représentée par la taxe unitaire contenue dans les mémoires TC, TD et TU.

Lorsque le contenu des compteurs C16/1 et C16/2 atteint 100, la porte 119 passe à 1 et entre une unité dans le compteur C10/1 en même temps qu'elle remet à zéro les compteurs C16/1 et C16/2 et inhibe la porte DC. Les compteurs C16/1 et C16/2 étant revenus à zéro, la sortie de la porte 119 revient à zéro et le comptage reprend jusqu'à ce que le signal "VIDE" du compteur CD/TC inhibe la porte DC2.

Les compteurs C16/1 et C16/2 contiennent donc la valeur de la sommation des taxes inférieures à 100, tandis que les compteurs C10/1 et C10/2 accumulent par exemple les francs et les dizaines de francs en code décimal codé binaire, et c'est cette valeur qui est affichée.

On constate donc que l'invention permet en indiquant dans chaque registre-mémoire à la suite du numéro d'appel, la durée unitaire qui lui est affectée, de calculer et d'afficher la taxe pendant que se déroule la communication téléphonique. L'inscription de cette durée unitaire dans les registres-mémoires peut être effectuée en utilisant le moins d'emplacement de mémoire possible en supprimant le premier caractère spécial entre un préfixe et le numéro d'appel proprement dit, et en supprimant, dans le cas où l'appareil est relié à un autocommutateur, l'inscription du numéro spécial permettant la prise directe de la ligne.

Revendications de brevet

1. Générateur automatique d'appels téléphoniques comprenant une mémoire comportant une pluralité de registres-mémoires de capacité prédéterminée, un registre de lecture des signaux numériques lus dans la mémoire, un émetteur d'impulsions d'appel, un circuit de commande dudit émetteur d'impulsions d'appel, et des moyens pour détecter la tonalité d'invitation à transmettre, chaque registre-mémoire pouvant contenir au moins un numéro d'appel, ce générateur comprenant en outre des moyens pour détecter si le premier ou les deux premiers chiffres du numéro d'appel sélectionné forment un préfixe, et le circuit de commande de l'émetteur d'impulsions d'appel comprenant des moyens commandés par le détecteur du préfixe pour arrêter l'émission du numéro d'appel à la fin du préfixe, et des moyens commandés par le détecteur de la tonalité d'invitation à transmettre pour reprendre l'émission du numéro d'appel au début du numéro proprement dit, caractérisé par le fait que les moyens pour détecter si le premier ou les deux premiers chiffres du numéro d'appel sélectionné formant un préfixe comprennent des moyens pour conserver en mémoire la valeur d'au moins un préfixe, et des moyens pour comparer cette valeur avec le premier ou les deux premiers chiffres du numéro d'appel sélectionné lu dans le registre de lecture.

2. Générateur automatique d'appels téléphoniques selon la revendication 1, caractérisé par le fait que lesdits moyens pour conserver en mémoire la valeur d'au moins un préfixe sont formés par au moins une partie d'un des registres-mémoires de la mémoire d'appel.

3. Générateur automatique d'appels téléphoniques, comprenant une mémoire comportant une pluralité de registres-mémoires de capacité prédéterminée, un registre de lecture des signaux numériques lus dans la mémoire, un émetteur d'impulsions d'appel, un circuit de commande dudit émetteur d'impulsions d'appel, et des moyens pour détecter la tonalité d'invitation à transmettre, chaque registre-mémoire pouvant contenir au moins un numéro d'appel, caractérisé par le fait qu'il comprend des moyens pour conserver en mémoire une information indiquant s'il est ou non raccordé au réseau téléphonique par l'intermédiaire d'un autocommutateur, des moyens pour conserver en mémoire, dans le cas où il est raccordé au réseau téléphonique par l'intermédiaire d'un autocommutateur, le numéro spécial à émettre en vue de la prise directe du réseau, des moyens pour relier sélectivement l'entrée dudit registre de lecture soit aux moyens pour conserver en mémoire le numéro spécial, soit à un registre- mémoire déterminé, et des moyens pour transmettre audit circuit de commande de l'émetteur d'impulsions d'appel le contenu dudit registre de lecture.

4. Générateur automatique d'appels téléphoniques selon la revendication 3, caractérisé par le fait que les moyens pour relier sélectivement l'entrée dudit registre de lecture soit aux moyens pour conserver en mémoire le mémoire spécial, soit à un registre-mémoire déterminé, sont commandés par les moyens pour conserver en mémoire l'information indiquant que le générateur est ou non raccordé au réseau téléphonique par l'intermédiaire d'un autocommutateur, pour, dans le cas où cette information est positive, relier, avant de débuter un cycle d'émission, l'entrée du registre de lecture aux moyens pour conserver en mémoire le numéro spécial, et pour le relier au registre-mémoire déterminé après l'émission du numéro spécial.

5. Générateur automatique d'appels téléphoniques selon l'une quelconque des revendications 3 et 4, caractérisé par le fait que le circuit de commande de l'émetteur d'impulsions d'appel comprend des moyens pour empêcher l'émission du numéro d'appel après l'émission du numéro spécial, et des moyens, commandés par le détecteur de la tonalité d'invitation à transmettre, pour commencer l'émission du numéro d'appel après réception de la tonalité d'invitation à transmettre.

6. Générateur automatique d'appels téléphoniques selon l'une quelconque des revendications 3 à 5, caractérisé par le fait que les moyens pour conserver en mémoire l'information indiquant si le générateur est ou non raccordé au réseau téléphonique par l'intermédiaire d'un autocommutateur, et les moyens pour conserver en mémoire le numéro spécial à émettre en vue de la prise directe du réseau, sont formés par au moins une partie d'un des registres-mémoires de la mémoire des numéros d'appel.

7. Générateur automatique d'appels téléphoniques, comprenant une mémoire comportant une pluralité de registres-mémoires de capacité prédéterminée et un registre de lecture des signaux numériques lus dans la mémoire, chaque registre-mémoire pouvant contenir au moins un numéro d'appel, ce générateur comprenant en outre des moyens pour conserver en mémoire la valeur d'une unité de taxation, ou taxe de base, des moyens pour ajouter au contenu d'un compteur la valeur de cette taxe de base à des intervalles de temps réguliers, égaux à une durée unitaire, et des moyens pour afficher le contenu dudit compteur, caractérisé par le fait qu'il comporte des moyens pour conserver en mémoire une information indiquant s'il est branché ou non à un central téléphonique fournissant des impulsions périodiques auxdits intervalles de temps réguliers et des moyens pour, dans le cas où cette information est positive, ajouter la valeur de la taxe de base au contenu du compteur à chaque réception de ladite impulsion.

8. Générateur automatique d'appels téléphoniques selon la revendication 7; prévu pour pouvoir être branché sur un central téléphonique ne fournissant pas d'impulsions périodiques, caractérisé par le fait qu'il comprend des moyens pour enregistrer la durée unitaire affectée à au moins un numéro d'appel, ladite durée unitaire étant inscrite, dans le registre-mémoire de ce numéro d'appel, après le numéro d'appel, et un premier signal spécial séparant le numéro d'appel et la durée unitaire, et que des moyens sont prévus pour relier la sortie desdits moyens pour enregistrer la durée unitaire aux moyens pour ajouter au contenu d'un compteur la valeur de la taxe de base.

9. Générateur automatique d'appels téléphoniques selon la revendication 8, dans lequel un registre-mémoire ne contenant pas de durée unitaire à la suite du numéro d'appel peut contenir un deuxième numéro d'appel également séparé du premier numéro d'appel par ledit premier signal spécial, et dans lequel un deuxième signal spécial occupe les emplacements de mémoire non utilisés, caractérisé par le fait qu'il comprend des moyens pour détecter si le caractère d'un rang prédéterminé rencontré après le premier signal spécial qui suit un numéro d'appel est un deuxième signal spécial, et des moyens pour, dans l'affirmative, valider les moyens pour ajouter au contenu d'un compteur la valeur de la taxe de base.

10. Générateur automatique d'appels téléphoniques selon l'une quelconque des revendications 7 à 9, et la revendication 1, caractérisé par le fait que lesdits moyens pour détecter si les deux premiers chiffres du numéro d'appel sélectionné forment un préfixe, sont agencés également pour valider les moyens pour ajouter au contenu d'un compteur la valeur de la taxe de base.

11. Générateur automatique d'appels téléphoniques selon l'une quelconque des revendications 7 à 10, caractérisé par le fait que lesdits moyens pour conserver en mémoire la valeur d'une unité de taxation sont formés par au moins une partie d'un des registres-mémoires de la mémoire des mémoires d'appels.

12. Générateur automatique d'appels téléphoniques selon la revendication 7, caractérisé par le fait que lesdits moyens pour conserver en mémoire une information indiquant s'il est branché ou non à un central téléphonique lui fournissant des impulsions périodiques auxdits intervalles de temps réguliers sont formés par au moins une partie d'un des registres-mémoires de la mémoire d'appel.

13. Générateur automatique d'appels téléphoniques selon l'une quelconque des revendications 2, 6, 11 et 12, caractérisé par le fait qu'il comprend un circuit d'initialisation apte, à la mise sous tension du générateur, à adresser ledit registre-mémoire contenant les informations, à déclencher un cycle de lecture de ce registre-mémoire, et à transférer le contenu de ce registre-mémoire dans des mémoires de travail.

Fig.1

Fig. 2

2/4

0018875

Fig.3

3/4

0018875

0018875

## Fig.4

— MSI

— RAZ

— RZI

— INIT

## Fig.5

4 | 3 | 2 | 1 | 0 | 9 | 8 | 7 | 6 | 5 | 4

**Office européen
des brevets**

**RAPPORT DE RECHERCHE EUROPEENNE**

Numéro de la demande

EP 80 40 0492

| DOCUMENTS CONSIDERES COMME PERTINENTS | | |
|---|---|---|
| Catégorie | Citation du document avec indication, en cas de besoin, des parties pertinentes | Revendication concernee |
| | US - A - 3 105 121 (FIELD)<br>* alinéa 4, ligne 37 à colonne 5, ligne 68 *<br><br>-- | 1,3 à 5 |
| | US - A - 3 670 111 (BUKOSKY<br>* colonne 7, lignes 18 à 74 *<br><br>-- | 1,3 à 5 |
| | DE - A - 2 426 690 (INTERNATIONAL STANDARD ELECTRIC)<br>* page 3, ligne 14 à page 4, ligne 31 *<br><br>-- | 1,3 à 5 |
| | FR - A - 2 135 008 (MODERN TELE-PHONES)<br>* page 1, lignes 1 à 22; page 4, ligne 39 à page 10, ligne 34; figure 1 *<br><br>-- | 1,5 |
| | FR - A - 2 408 955 (BASSET)<br>* page 2, ligne 19 à page 4, ligne 26; figure *<br><br>-- | 8 |
| D | FR - A - 2 290 107 (SOPROGESPAR)<br>* page 2, ligne 40 à page 6, ligne 1 *<br><br>---- | 1,9 |

CLASSEMENT DE LA DEMANDE (Int Cl )

H 04 M 1/274
15/30

DOMAINES TECHNIQUES RECHERCHES (Int. Cl. )

H 04 M 1/274
1/272
15/30
1/276

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 30-06-1980 | KEPPENS |

OEB Form 1503.1 06.78